# EUROPEAN PATENT SPECIFICATION

(11) **EP 2 575 043 B1**
(45) Date of publication and mention of the grant of the patent: **15.10.2014**
(21) Application number: 12306270.5
(22) Date of filing: 15.10.2012
(51) Int. Cl.: G06F 9/455, G06F 9/50, G06F 21/62, G06F 21/53

(54) **Method to secure an application executable in a distant server accessible via a public computer network, and improved virtual server.**
Verfahren zur Sicherung einer Anwendung, die in einem entfernten Server über ein öffentliches Computernetzwerk ausführbar ist, sowie verbesserter virtueller Server
Procédé pour sécuriser une application exécutable dans un serveur distant accessible par l'intermédiaire d'un réseau informatique public et serveur virtuel amélioré.

(43) Date of publication of application: 03.04.2013
(73) Proprietor: Kyriba, 92210 Saint-Cloud (FR)
(72) Inventor: Pidault, Henri, 92070 SEVRES (FR); Rodrigues, Dominique, 91560 CROSNE (FR)
(74) Representative: Tanguy, Yannick

(56) References cited:
- US-A1- 2005 120 160
- US-A1- 2012 089 666
- US-B1- 7 941 510

## Description

The invention relates to a method to improve access security to applications stored in a distant server accessible via a public computer network, such as Internet. The invention also relates to an improved virtual server.

A user of a computer network can access to two types of items: data and applications.

Data are, for example, values of variables, songs, videos, photos, economical data, information data, etc.

An application is a computer program (also known as « software »). It is a sequence of instructions written to perform a specified task with a computer.

In a general manner, applications collect and/or use and/or transform and/or display data.

For example, in a website where videos can be watch, a video as such is data, and the video reader which allows the website to display the video is an application.

Nowadays, more and more data or applications are stored "in the cloud". It means that the data or the applications are no longer stored on the user's computer, but they are stored in a distant server, accessible via a computer network.

In order to access the data or the applications via the network, a secured protocol has been developed: the Secure Shell (SSH). It is a cryptographic network protocol to secure data communication.

It is mainly a cryptographic protocol that allows an administrator to access to data or application by providing a login and a password.

Even if many advantages are associated to such organization, there is still a risk of intrusions by finding by any mean the login and the password of the administrator.

One of the main fears of the companies which would like to use technologies in the cloud is the feeling that anybody could access to their data or their application, in particular some competitor. When servers are not anymore hosted within the walls of the company, it is difficult to know who could succeed to have any kind of access to the files which are stored on these machines.

This fear is enhanced with "virtual server", which results from the partitioning using virtualization techniques of a real server into multiple independent virtual servers. A virtual server is in fact a file stored on a physical machine (computer or storage array). Each virtual server has the features of a dedicated server: each can run on a different operating system and restart independently. A virtual server is actually a file hosted on a physical server or within a SAN or a NAS system

If a virtual server is used, it may seem easier to steal or download this entire file, instead of robbing a complete physical server.

Furthermore, some users are afraid to have their data or application stolen, for example by a corrupted system administrator in charge of the cloud computing.

These fears hinder the adoption of this technology and all the advantages that companies could benefit with it.

In order to improve the security of the data and the application in the cloud, many security protocols have been developed.

All of them aim to reinforce the security of the SSH access: the more the login/password is complex the better the security is. Some protocols also require changing regularly the password.

In order to be approved by some organization, the SSH access of the server (real or virtual) has to comply with the ISO norm 27001-A11.5.

Despite the high complexity of the SSH access protocol, some known methods exist to force the access.

A first one is called "Man-in-the-middle attack". It mainly consists in secretly "listening" the communication between a user and the server in order to capture to password and to access the server while posing as the legitimate user.

A second one is called "brute-force attack" or "exhaustive key search". It is a cryptanalytic attack that consists in trying methodically every possible password. It can, in theory, be used against any encrypted access.

US 2012/0089666 relates to the administration of virtual machines.

The present invention concerns access security to applications and, in particular, to the administration access of an application, but not access security to data.

Indeed, one of the most important security problems of cloud computing for a company is to keep secured the administration access to its application.

The risks are, for example, modifying the application in view of misappropriation of information, in view of ordering operation on behalf of a legitimate user, in view of using it freely (without payment of royalties), etc.

An object of the present invention is to provide a cheap and efficient method to secure an application stored in a distant server accessible via a computer network.

Contrary to what have been done until now (improving the complexity of the password access), the invention, fully detailed in this description, proposes to eliminate the administration access of a virtual server when the latter is launched into production.

To this end, the invention relates to a method to secure an application executable in a distant server accessible via a public computer network, **characterized in that** it comprises the following steps:
a) on a local server having an secured administration access, accessing the local server with administration rights;
b) creating and configuring a template of a virtual server in view of an exploitation of said application;
c) introducing in the template a sequence of instructions programmed to remove secured administration access of the virtual server when this later will be first boot;
d) generating a virtual server based on said template;
e) first booting the generated virtual server in order to remove the secured administration access of said virtual server;
f) launching the virtual server into production.

According to other embodiments:
- step e) may be performed in a sandbox;
- the method may further comprise between step e) and f), a step e1) of checking whether the secured administration access has been removed, and returning to step b) if the secured administration access has not been removed, or going to step f) if the secured administration access has been removed ;
- the method may further comprise after step f), a step g) of stopping and destroying the virtual server in the following cases:
   f1) if an update is necessary;
   f2) if the virtual server does not respond or its services are not present,
   even after a reboot;
   f3) if there is a doubt concerning the good behavior of the virtual server;
      and a step h) of returning to step a) if an update is necessary or of returning to step d) in the other cases.
- the method may further comprise between step c) and d), a step c1) of encryption of the template.

The invention also relates to a virtual server susceptible to be obtained by the method according to the invention, **characterized in that** it is free of secured administration access.

By opposition to a "distant" server", a "local" server is a server that is not accessible via Internet. A local server may be a physical server or a virtual server.

The invention also relates to virtual server susceptible to be obtained by the method here above, **characterized in that** it is free of secured administration access.

The accompanying drawings, which are included to provide a further understanding of the invention and to illustrate embodiments of the invention together with the description, serve to explain the principle of the invention. In the drawings:
FIG. 1 is a schematic representation of an installation suitable to perform the method according to the invention; and
FIG. 2 is a schematic diagram of the method according to the invention.

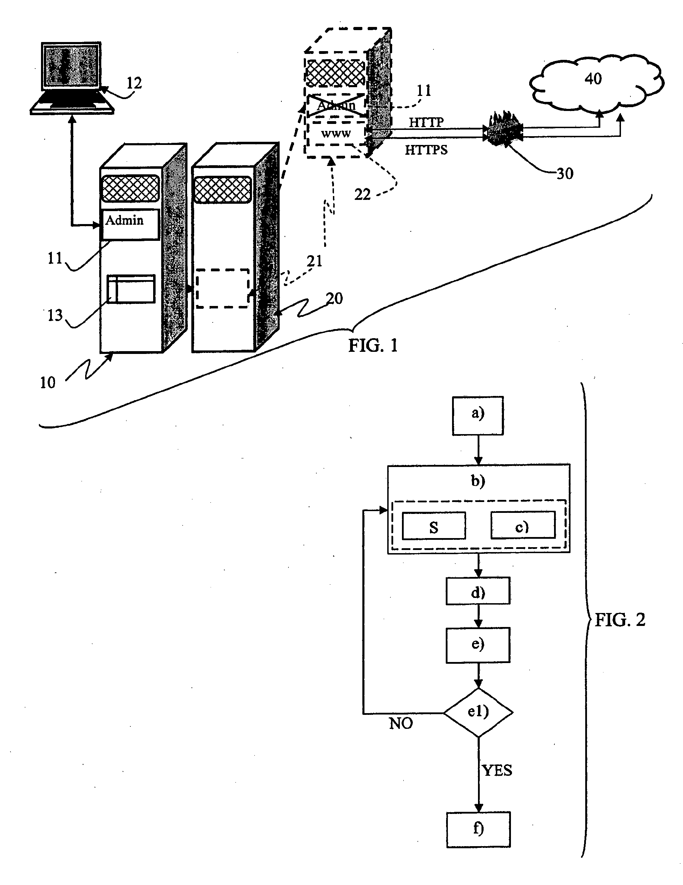

In order to secure an application S (see fig. 2) executable in a distant server accessible via a public computer network, the method according to the invention comprises a first step a) of accessing with administration rights a local server 10 having a secured administration access 11.

For security reasons, the local server preferably has no access to a public computer network such as Internet. More preferably, a user may only monitor the local server via an *in situ* workstation 12, it means a workstation directly linked to the server, not via a private network such as an Intranet.

The secured administration access 11 of the local server 10 is preferably performed by a cryptographic network protocol, in particular with the SSH (Secure Shell) protocol.

In the following description, the secured administration access given as an illustrative example is an SSH access. Other protocol may be used, provided that they allow performing all the steps of the method according to the invention.

This later comprises a second step b) of creating and configuring, on the local server 10, a template 13 of a virtual server in view of an exploitation of the application executable on said virtual server.

This configuration may comprise the following actions:
- Implementation of the services that will run in the virtual server: e.g. Network Time Protocol (NTP), WEB access, Data base Management System, etc. ;
- Configuration of the application as such ;

When creating the template 13 on the local server 10, a secured administration access (e.g. SSH access) is provided to the template to configure it.

During the configuration of the template 13, the method according to the invention comprise a third step c) of introducing in the template 13 a sequence of instructions programmed to remove the secured administration access of the virtual server when this later will be first boot.

Such instructions may be as follows, for an SSH access on a Linux operating system: an init file is installed before the next boot. This init file comprises an admin command that will:
- remove the ssh access;
- erase this init file;

When the template is configured, the method according to the invention comprises a fourth step d) of generating a virtual server 21 based on said template 13.

Then, in a fifth step e), the method comprises a first booting of the generated virtual server 21 in order to remove the secured administration access of said virtual server 21.

As the virtual server 21 has instructions to allow WEB access, it could be preferable to perform the first boot of the virtual server according to the invention in a sandbox (not illustrated), which is a testing environment that isolates the virtual server from the production environment or repository. In other words, the sandbox allows the first boot of the virtual server without allowing it to be "on-line" in the WEB.

The sandbox allows performing a step e1), just after step e), of checking whether the secured administration access has been removed, and returning to step b) if the secured administration access has not been removed, or going to a step f) of launching the virtual server 21 into production, if the secured administration access has been removed (see fig. 2).

The sandbox also allows the following actions:
- Check that service is provided
- Stop the virtual server 21 for an in deep analysis in its files; and/or
- Validate the virtual server or return to step b).

Once the template 13 is validated (the virtual server 21 launched from the template 13 in sandbox has its secured administration access removed and supplied the requested services), a step f) of launching the virtual server into production is performed.

Step f) could be performed directly in the local server 10 that was used to create the template, because the virtual server generated at step d) runs totally independently from the local server 10.

With another possible architecture illustrated in figure 1, step f) is performed in a physical "host" server 20, which is different from the physical local server 10. The host server comprises at least one port that allows running virtual server 21 to be accessible from Internet 40. This architecture improves security because the physical server 10 where the template is stocked is different from the physical server 20 where the virtual server 21 is running.

Thus, at this stage of the method, the virtual server 21 is on-line and the services provided could be accessible from Internet, via the WEB access 22, for the users with a login and a password.

This communication is made, for example, via the HTTP or HTTPS protocol. A firewall 30 is preferably provided between the virtual server 21 and the public network 40.

The method according to the invention may further comprise after step f), a step g) of stopping and destroying the virtual server in the following cases:
f1) if an update is necessary;
f2) if the virtual server does not respond or its services are not present, even after a reboot;
f3) if there is a doubt concerning the good behavior of the virtual server;

If one of these cases occurs, the method according to the invention comprises a step h) of returning to step a) if an update is necessary or of returning to step d) in the other case.

The method according to the invention and especially step c) avoid any possibility to login into a virtual server as an administrator. It is then impossible to modify the applications S that are running on this virtual server.

Because when the virtual server will be online, there will be not even a mean to check what is happening inside. On the other hand, the template which will be used to provide this secure virtual server still needs to keep access for its configuration.

By following the method according to the invention, a company is ensured to have a virtual server where it is at least quite impossible to log in.

The virtual server will run as a black box. But since it is based on a virtual server provided by a template, it is easy and cost effective to often replace this black box by another. In case of any doubt, an incriminated virtual server could even be recovered by the company to deal a forensic analysis, while the service is still delivered by a new virtual server.

Preferably, to enhance the security, it is advised to use encryption of the template. For example, a password (128 bit key stored in Advanced Encryption Standard (AES) format) is used in order to encrypt the file. This password will be necessary when the server will be launched.

The company, which owns the virtual server based on this encrypted file, may be the only one to know its password if it has access to an admin tool to launch its virtual server. This is the important to be sure that no cloud system administrator may have an unauthorized access to the company data.

The method according to the invention could be adapted to many system architectures, which allows improving security of on-line soft applications of many company, without needing to modify their system architecture.

Moreover, the security is drastically improved without needing a complex policy of password settlement and renewal.

## Claims

1. Method to secure an application executable in a distant server accessible via a public computer network, **characterized in that** it comprises the following steps:
a) on a local server (10) having an secured administration access (11), accessing the local server with administration rights;
b) creating and configuring a template (13) of a virtual server (21) in view of an exploitation of said application;
c) introducing in the template (13) a sequence of instructions programmed to remove secured administration access (11) of the virtual server (21) when this later will be first boot;
d) generating a virtual server (21) based on said template (13);
e) first booting the generated virtual server (21) in order to remove the secured administration access (11) of said virtual server;
f) launching the virtual server (21) into production.

2. The method according to claim 1, wherein step e) is performed in a sandbox.

3. The method according to anyone of claim 1 or 2, further comprising between step e) and f), a step e1) of checking whether the secured administration access has been removed, and returning to step b) if the secured administration access has not been removed, or going to step f) if the secured administration access has been removed.

4. The method according to anyone of claim 1 to 3, further comprising after step f), a step g) of stopping and destroying the virtual server in the following cases:
f1) if an update is necessary;
f2) if the virtual server does not respond or its services are not present, even after a reboot;
f3) if there is a doubt concerning the good behavior of the virtual server; and a step h) of returning to step a) if an update is necessary or of returning to step d) in the other cases.

5. The method according to anyone of claim 1 to 4, further comprising between step c) and d), a step c1) of encryption of the template.

6. A virtual server susceptible to be obtained by the method according to anyone of claim 1 to 5, **characterized in that** it is free of secured administration access.

## Patentansprüche

1. Verfahren zum Sichern einer Anwendung, die auf einem entfernten Server ausführbar ist, auf den über ein öffentliches Computernetzwerk zugegriffen werden kann, **dadurch gekennzeichnet, dass** es die folgenden Schritte umfasst:
a) auf einem lokalen Server (10) mit einem gesicherten Administratorzugriff (11), Zugreifen auf den lokalen Server mit Administratorrechten;
b) Erstellen und Konfigurieren einer Vorlage (13) eines virtuellen Servers (21) im Hinblick auf eine Nutzung der Anwendung;
c) Eingeben in der Vorlage (13) einer Abfolge von Befehlen, die programmiert sind, um den gesicherten Administratorzugriff (11) des virtuellen Servers (21) zu entfernen, wenn der letztere erstmals hochgefahren wird;
d) Generieren eines virtuellen Servers (21) basierend auf der Vorlage (13);
e) erstmaliges Hochfahren des generierten Servers (21), um den gesicherten Administratorzugriff (11) des virtuellen Servers zu entfernen;
f) Starten des virtuellen Servers (21) in den Betrieb.

2. Verfahren nach Anspruch 1, wobei Schritt e) in einer "Sandbox" ausgeführt wird.

3. Verfahren nach einem der Ansprüche 1 oder 2, weiterhin umfassend zwischen Schritt e) und f) einen Schritt e1) des Prüfens, ob der gesicherte Administratorzugriff entfernt wurde, und des Zurückkehrens zu Schritt b), wenn der gesicherte Administratorzugriff nicht entfernt wurde, oder des Fortfahrens mit Schritt f), wenn der gesicherte Administratorzugriff entfernt wurde.

4. Verfahren nach einem der Ansprüche 1 bis 3, weiterhin umfassend nach Schritt f) einen Schritt g) des Anhaltens und Vernichtens des virtuellen Servers in den folgenden Fällen:
f1) wenn ein Update erforderlich ist;
f2) wenn der virtuelle Server nicht antwortet oder seine Dienste nicht verfügbar sind, sogar nach einem Neustart;
f3) wenn es Zweifel an dem fehlerfreien Verhalten des virtuellen Servers gibt;
und einen Schritt h) des Zurückkehrens zu Schritt a), wenn ein Update erforderlich ist, oder des Zurückkehrens zu Schritt d) in den anderen Fällen.

5. Verfahren nach einem der Ansprüche 1 bis 4, weiterhin umfassend zwischen Schritt c) und d) einen Schritt c1) eines Verschlüsselns der Vorlage.

6. Virtueller Server, der mit dem Verfahren nach einem der Ansprüche 1 bis 5 erhalten werden kann, **dadurch gekennzeichnet, dass** er keinen gesicherten Administratorzugriff enthält.

## Revendications

1. Procédé pour sécuriser une application exécutable dans un serveur éloigné accessible par l'intermédiaire d'un réseau informatique public, **caractérisé en ce qu'**il comprend les étapes suivantes :
a) sur un serveur local (10) ayant un accès d'administration sécurisé (11), l'accès au serveur local avec des droits d'administration ;
b) la création et la configuration d'un modèle (13) d'un serveur virtuel (21) en vue d'une exploitation de ladite application ;
c) l'introduction dans le modèle (13) d'une séquence d'instructions programmées pour supprimer l'accès d'administration sécurisé (11) du serveur virtuel (21) lors du premier démarrage de ce dernier ;
d) la génération d'un serveur virtuel (21) sur la base dudit modèle (13) ;
e) le premier démarrage du serveur virtuel généré (21) de manière à supprimer l'accès d'administration sécurisé (11) dudit serveur virtuel ;
f) le lancement en production du serveur virtuel (21).

2. Procédé selon la revendication 1, dans lequel l'étape e) est effectuée dans un « sandbox ».

3. Procédé selon l'une quelconque des revendications 1 et 2, comprenant en outre, entre l'étape e) et l'étape f), une étape e1) de vérification si oui ou non l'accès d'administration sécurisé a été supprimé, et le retour à l'étape b) si l'accès d'administration sécurisé n'a pas été supprimé, ou le passage à l'étape f) si l'accès d'administration sécurisé a été supprimé.

4. Procédé selon l'une quelconque des revendications 1 à 3, comprenant en outre, après l'étape f), une étape g) d'arrêt et de destruction du serveur virtuel dans les cas suivants :
f1) si une mise à jour est nécessaire ;
f2) si le serveur virtuel ne répond pas ou ses services ne sont pas présents, même après un redémarrage ;
f3) s'il existe un doute concernant le bon comportement du serveur virtuel ;
et une étape h) de retour à l'étape a) si une mise à jour est nécessaire ou de retour à l'étape d) dans les autres cas.

5. Procédé selon l'une quelconque des revendications 1 à 4, comprenant en outre, entre l'étape c) et l'étape d), une étape c1) de cryptage du modèle.

6. Serveur virtuel susceptible d'être obtenu par le procédé selon l'une quelconque des revendications 1 à 5, **caractérisé en ce qu'**il est dépourvu d'accès d'administration sécurisé.
